# EUROPÄISCHE PATENTSCHRIFT

(11) **EP 4 244 497 B1**
(45) Veröffentlichungstag und Bekanntmachung des Hinweises auf die Patenterteilung: **15.04.2026**
(21) Anmeldenummer: 21816342.6
(22) Anmeldetag: 16.11.2021
(51) Int. Cl.: F16D 1/076

(54) **GETRIEBE FÜR EINE ANTRIEBSVORRICHTUNG FÜR EIN FAHRZEUG, EIN ZAHNRAD FÜR EIN GETRIEBE UND FAHRZEUG MIT EINEM GETRIEBE**
TRANSMISSION FOR A DRIVE DEVICE FOR A VEHICLE, A GEAR FOR A TRANSMISSION, AND VEHICLE COMPRISING A TRANSMISSION
TRANSMISSION POUR UN DISPOSITIF D'ENTRAÎNEMENT POUR UN VÉHICULE, ROUE DENTÉE POUR UNE TRANSMISSION, ET VÉHICULE COMPRENANT UNE TRANSMISSION

(30) Priorität: 16.11.2020 DE 102020130216
(43) Veröffentlichungstag der Anmeldung: 20.09.2023
(73) Patentinhaber: Bombardier Transportation GmbH, 10785 Berlin (DE)
(72) Erfinder: HAGEMANN, Robert, 01159 Dresden (DE)
(74) Vertreter: Zimmermann & Partner Patentanwälte mbB
(86) Internationale Anmeldenummer: PCT/EP2021/081861
(87) Internationale Veröffentlichungsnummer: WO 2022/101506

(56) Entgegenhaltungen:
- EP-A1- 3 772 802
- EP-A2- 1 532 033
- EP-B1- 1 532 033
- DD-A1- 99 208
- US-B2- 9 157 483

## Beschreibung

### Technisches Gebiet

Die vorliegende Erfindung betrifft ein Getriebe für eine Antriebsvorrichtung für ein Fahrzeug, insbesondere für ein Schienenfahrzeug oder Bus. Weiterhin betrifft die Erfindung ein Zahnrad für ein solches Getriebe eine Antriebsvorrichtung mit einem solchen Getriebe und ein Fahrzeug mit einer solchen Antriebsvorrichtung.

### Vorbekannter Stand der Technik

Es ist bekannt, dass Fahrzeuge Getriebe aufweisen, um Drehzahlen und Momente je nach Bedarf zu wandeln. Beispielsweise kann ein solches Fahrzeug als Schienenfahrzeug ausgebildet sein, wobei dieses eine Antriebsvorrichtung mit einem E-Motor und einem Getriebe aufweist.

In manchen Fällen kann es dazu kommen, dass ein elektrischer Stromfluss über eine Abtriebswelle des E-Motors in oder durch das Getriebe stattfindet, wodurch es zu Materialschäden an Übertrittsstellen kommen kann.

Der Stromfluss kann beispielsweise dadurch hervorgerufen werden, indem in dem Antriebssystem verschiedene Kapazitäten entstehen. Der Rotor des E-Motors hat über den Luftspalt eine Kapazität zum Statorgehäuse. Die Motorwindungen sind isolierend umwickelt und zeigen deswegen eine Kapazität sowohl zum Rotor, als auch zum Statorgehäuse. Der Schmierfilm im Lager zwischen Innenring und Wälzkörper sowie Außenring und Wälzkörper wirkt als Isolator. Somit entstehen auch im Lager zwei Kapazitäten in Reihe. Beachtet werden muss dabei, dass die Lagerkapazitäten veränderlich sind. Je nach Betriebsbedingung ist der Schmierfilm im Lager dünner oder dicker. Im Stillstand kann es auch vorkommen, dass zwischen Wälzkörper und Lagerring direkter Kontakt besteht und somit die Kapazitäten des Lagers entfallen. Die Schmierfilmdicke und damit auch die Kapazität hängen unter anderem von mechanischer Belastung, Temperatur und Schmiermittelart ab. Durch die Kapazität der Wicklung zum Statorgehäuse kommt es in den Windungen zu Verlusten in Form von zusätzlichen Erdströmen im Stator, welche zirkulare, hochfrequente magnetische Flüsse um den Rotor anregen. Diese Flüsse induzieren Spannungen in der Welle, die bei Überwindung des Schmierfilms zu kreisförmigen Strömen im Motor führen. Die Spannungen sind ähnlich zu den klassischen Wellenspannungen, allerdings sind sie wesentlich größer und hochfrequent. Die Stromamplituden liegen zwischen 0,5 und 20 A. Die in Wälzlagern auftretenden Schäden durch Stromdurchgang haben je nach Ursache ein unterschiedliches Erscheinungsbild, z.B. matt-graue Laufspuren, gealtertes Schmiermittel, Riffelbildung und White Etching Cracks. Weiterhin können diese Ströme nicht nur zirkulieren, sondern auch über das restliche Antriebssystem zum Beispiel in eine Schiene abwandern.

Bekannte Gegenmaßnahmen sind beispielsweise Lager mit internen Isolationsschichten, isolierende Kupplungen, geeignete Erdungen, Umrichter, du/dt-Filter (Motordrossel), Sinusfilter und/oder geeignete Schmiermittel.

### Nachteile des Stands der Technik

Derartige Getriebe für Antriebsvorrichtung mit den skizzierten Lösungen sind meist hinsichtlich der daran gestellten Anforderungen bedingt optimal ausgebildet. Insbesondere können die skizzierten Lösungen die Nachteile eines Stromfluss' oder den Stromfluss selbst nicht vollständig eliminieren.

### Problemstellung

Eine Aufgabe der vorliegenden Erfindung ist es daher, ein Getriebe für eine Antriebsvorrichtung eines Fahrzeugs bereitzustellen, welches einen einfachen und robusten Aufbau aufweist und gleichzeitig eine Verbesserung hinsichtlich des Vorhandenseins von unerwünschten Stromflüssen erzielt.

### Erfindungsgemäße Lösung

Die obige Aufgabe wird durch ein Getriebe für eine Antriebsvorrichtung für ein Fahrzeug nach Anspruch 1, durch ein Zahnrad für ein solches Getriebe nach Anspruch 13, durch eine Antriebsvorrichtung mit einem solchen Getriebe nach Anspruch 14 und durch ein Fahrzeug mit einer solchen Antriebsvorrichtung nach Anspruch 15 gelöst.

Es wird ein Getriebe für eine Antriebsvorrichtung für ein Fahrzeug, insbesondere für ein Schienenfahrzeug, vorgeschlagen, wobei das Getriebe Folgendes aufweist: Ein Gehäuse mit einer darin drehbar gelagerten ersten Welle und mit einer im Gehäuse drehbar gelagerten zweiten Welle. Die erste Welle kann beispielsweise mit einer elektrischen Maschine rotativ verbunden sein, wobei von der elektrischen Maschine erzeugte elektrische Ströme in die erste Welle des Getriebes einfließen könnten.

Wird die elektrische Maschine als elektrischer Motor betrieben, so könnte die erste Welle - bezogen auf das Getriebe - als Antriebswelle oder Eingangswelle bezeichnet werden. Insbesondere ist die Antriebswelle des Getriebes mit einer Abtriebswelle des Motors verbunden.

Ein mit der ersten Welle drehbar verbundenes erstes Zahnrad wirkt mit einem auf der zweiten Welle vorgesehenen zweiten Zahnrad im Sinne einer Zahnrad-Übersetzung zusammen. Die zweite Welle kann dabei als Abtriebswelle oder Ausgangswelle bezeichnet werden, wobei hierbei explizit inkludiert ist, weitere Getriebewellen und Getriebestufen vorzusehen.

Würde die elektrische Maschine generatorisch betrieben werden, so kann die mit dem Generator drehfest verbundene erste Welle als Abtriebswelle oder als Ausgangswelle benannt werden. D. h. die Leistung fließt über die Abtriebswelle des Getriebes in die Antriebswelle des Generators.

Das erste Zahnrad und das zweite Zahnrad weisen jeweils miteinander im Eingriff stehende Zahnkränze auf.

Um unerwünschte Stromflüsse zu verhindern, ist/sind die erste und/oder die zweite Welle gegenüber dem Gehäuse isoliert und drehbar gelagert, beispielsweise durch Vorsehen von isolierenden Wälz- und/oder Kugellagern, oder indem isolierende Mittel zwischen Welle und Lager, und/oder zwischen Lagerschale und Lageraufnahme im Gehäuse vorgesehen sind.

Weiterhin kann ein elektrischer Übergang zwischen den Zahnkränzen effektiv verhindert werden, indem der erste Zahnkranz gegenüber der ersten Welle und/oder der zweite Zahnkranz gegenüber der zweiten Welle elektrisch isoliert angeordnet ist/ sind. Auf diese Weise wird ein elektrischer Stromfluss durch rotierende Teile oder durch das Gehäuse des Getriebes unterbunden. Dies führt zu weniger dadurch verursachte Fehler und damit zusammenhängender Materialzerstörung.

Gemäß einer Ausgestaltungsform sind isolierende Mittel zum Bereitstellen einer elektrischen Isolierung zwischen der ersten Welle und dem ersten Zahnkranz und/oder zwischen der zweiten Welle und dem zweiten Zahnkranz vorgesehen. Auf diese Weise wird zwar zugelassen, dass ein elektrisches Potenzial, ausgehend von einer mit der ersten Welle verbunden elektrischen Maschine, zwar die erste Welle und möglicherweise einen Teil des ersten Zahnrad umfasst, es wird jedoch effektiv verhindert, dass sich ein Stromfluss zwischen sich relativ bewegenden/rotierenden Komponenten und Bauteilen einstellt.

Gemäß einer weiteren Ausführungsform können die zuvor beschriebenen isolierenden Mittel im Bereich einer Welle-Nabe-Verbindung zwischen Zahnrad und Welle vorgesehen sein. Denkbar ist beispielsweise, eine solche Isolierung als eine isolierende Beschichtung und/oder als isolierende Buchse auszubilden.

Gemäß einer alternativen oder zusätzlichen Ausführungsform ist die erste Welle als Eingangswelle oder Antriebswelle derart ausgebildet, sodass diese einen rotativen Energieeintrag in das Getriebe ermöglicht.

Bezüglich einer Ausgestaltungsform wird ein Stromfluss von der ersten Welle in das Gehäuse - oder andersherum - verhindert, indem die zur rotativen Lagerung verwendeten Kugellager bzw. Wälzlager die erste Welle gegenüber dem Gehäuse isoliert lagern. Dies gilt auch, optional, für eine Verwendung von weiteren Wellen und Lagern.

Erfindungsgemäß wird offenbart, dass das erste Zahnrad und/oder das zweite Zahnrad zweigeteilt ausgebildet ist/sind. In einer Ausführungsform ist ein radial innenliegender Innenabschnitt drehfest mit einem radial außenliegenden Außenabschnitt verbindbar oder verbunden .

Die isolierenden Mittel sind erfindungsgemäß zwischen dem Innenabschnitt und dem Außenabschnitt, insbesondere wirksam isolierend, vorgesehen.

Der Innenabschnitt und der Außenabschnitt sind mithilfe einer Verbindungseinrichtung mittels Verbindungsmitteln drehfest miteinander verbunden, sodass eine Übertragung einer Rotationsbewegung, insbesondere eine Übertragung von Umfangskräften, von der ersten Welle hin zum Zahnkranz über den Innenabschnitt und den Außenabschnitt (oder zurück) realisiert werden kann.

Auf diese Weise wird erstmalig ermöglicht, eine einfache und sichere Konzeption einer Isolierung eines Getriebes darzustellen, wobei ein solches Konzept auch gegebenenfalls nachträglich in ein vorhandenes Getriebe integriert werden kann. Insbesondere ergibt sich vorteilhaft, dass eine isolierende Kupplung eingespart werden kann. Auch ist die beschriebene Lösung vorteilhaft gegenüber den eingangs genannten bekannten Lösungen, da eine Übertragung von Umfangskräften Kraftfluss-optimiert, beispielsweise unter Reduzierung von Flächenpressungen, realisiert werden kann.

Gemäß einer weiteren Ausführungsform kann der Innenabschnitt integral, insbesondere einstückig mit der jeweiligen Welle, d. h. beispielsweise mit der ersten/zweiten Welle, mit der Eingangs-/Ausgangswelle, und/oder mit der An-/Abtriebswelle, ausgebildet sein. Auf diese Weise werden Bauteilkomponenten eingespart.

Gemäß einer Ausgestaltung weist der Innenabschnitt einen größeren Außendurchmesser als ein Wellenabschnitt, insbesondere als ein Lagerabschnitt, der jeweiligen Welle auf.

Weiterhin wird vorgeschlagen, das mit Innenabschnitt und Außenabschnitt und mit den dazwischen vorgesehenen isolierenden Mitteln ausgebildete Zahnrad weiterhin mit einer Verbindungseinrichtung mit Verbindungsmitteln auszustatten, sodass Kraftübertragung zwischen Innenabschnitt und Außenabschnitt gewährleistet wird.

Gemäß einer vorteilhaften Ausführungsform, weist der Zahnkranz des mindestens zweiteilig, mit Innenabschnitt und Außenabschnitt ausgebildeten Zahnrads eine größere Anzahl an Zähnen auf, als der Zahnkranz des weiteren Zahnrads. Insbesondere ist das mindestens zweigeteilte Zahnrad im Verhältnis zu dem damit im Eingriff stehenden Zahnrad als Großrad ausgebildet.

In diesem Zusammenhang sei angemerkt, dass die Bezeichnung "Großrad" nicht primär die absolute Größe, sondern die verhältnismäßige Ausgestaltung beschreiben soll. Weiterhin entspricht im hier beschriebenen Erfindungskontext das zweite Zahnrad dem Großrad, sodass die Begriffe "Großrad" und "zweites Zahnrad" hier synonymisch verwendet werden können.

Das im Kontext dieser Erfindung beschriebene erste Zahnrad ist kleiner als das zweite Zahnrad ausgestaltet und weist entsprechend weniger Zähne auf. Insbesondere kann das erste Zahnrad somit als Ritzel bezeichnet werden, wobei auch hier keine absoluten geometrischen Ausmaße determiniert werden. Wird im Folgenden von dem "Ritzel" und/oder von dem "Großrad" gesprochen, so ist hierbei eine Getriebestufe des Getriebes beschrieben, wobei das Ritzel und/oder das Großrad nicht zwingend drehfest mit einer Antriebs- und/oder Abtriebswelle verbunden sind.

Gemäß einer Ausgestaltung sind das erste Zahnrad und das zweite Zahnrad, insbesondere das Ritzel und das Großrad, derart im Getriebe vorgesehen, dass entweder das erste Zahnrad/Ritzel oder das zweite Zahnrad/Großrad mit einer Antriebswelle oder mit einer Abtriebswelle verbunden sind.

Gemäß einem weiteren Aspekt weist der Innenabschnitt des zweigeteilten Zahnrads, insbesondere des Großrads, insbesondere des zweiten Zahnrads, einen Innenflansch mit einer Innenflanschfläche auf. Der Außenabschnitt ist mit einem Außenflansch und mit einer Außenflanschfläche ausgestattet, wobei der Außenflansch drehfest, insbesondere einstückig, mit dem Zahnkranz, insbesondere dem zweiten Zahnkranz, verbunden und ausgebildet ist. Vorzugsweise verlaufen die Flanschflächen zumindest teilweise in einer Radialrichtung des Zahnrads, insbesondere sind die Flanschflächen parallel zu einer Rotationsebene des Zahnrads, d. h. ausschließlich radial, ausgerichtet. Entsprechend überlappen sich Innenflansch und Außenflansch im Bereich der Flanschflächen in einer Axialrichtung des Zahnrads.

Die isolierenden Mittel weisen mindestens einen isolierenden Flansch-Scheibenring auf, der zwischen den Flanschflächen angeordnet werden kann, insbesondere angeordnet ist. Der Flansch-Scheibenring kann beispielsweise lokal im Bereich von Verbindungsmitteln vorgesehen sein, oder ringförmig gemäß einem Umfang der Flanschflächen verlaufen.

Gemäß einer Ausgestaltung weisen die isolierenden Mittel mindestens eine Isolierhülse und/oder ein Axial-Isolierelement zum elektrischen Isolieren eines Verbindungsmittels gegenüber dem Innenabschnitt oder gegenüber dem Außenabschnitt auf.

Insbesondere ist die Isolierhülse so aufgebaut, dass diese ein zylinderförmig ausgestaltetes Verbindungsmittel, insbesondere eine Schraube, zumindest teilweise, vorzugsweise vollständig umschließt, sodass ein elektrischer Kontakt zwischen dem Verbindungsmittel und einer Bohrung des Innenabschnitts oder des Außenabschnitt in Radialrichtung des Verbindungsmittels unterbunden wird.

Das Axial-Isolierelement kann beispielsweise als isolierende Unterlegscheibe ausgebildet sein, sodass ein Kopf, insbesondere ein Schraubenkopf, des Verbindungsmittels gegenüber einer Auflagefläche des Innenabschnitts oder des Außenabschnitts in Axialrichtung des Verbindungsmittels elektrisch isoliert ist.

Nach einer weiteren Ausgestaltung sind die isolierenden Mittel zumindest teilweise aus Kunststoff, insbesondere aus Poly-Ether-Ether-Keton (PEEK), Vetronit (auch als auch als EP GC 202, HGW 2372.1, EP-4, FR4 bezeichnet), Aluminiumoxid (Al₂O₃), und/oder oxidfaserverstärkter Oxidkeramik hergestellt. Hülsen, das Axial-Isolierelement (isolierende Unterlegscheiben) und der isolierende Flansch-Scheibenring können aus demselben Typ eines isolierenden Werkstoffs hergestellt werden, es ist aber nicht zwingend erforderlich.

Gemäß einer Ausführungsform sind die Werkstoffe von Flansch-Scheibenring und Innenflansch und/oder Außenflansch derart ausgewählt, sodass das entsprechende tribologische System einen Reibwert von mindestens µ=0,2, vorzugsweise mindestens µ=0,3, bevorzugt mindestens µ=0,4 aufweist.

Im Kontext der vorliegenden Erfindung wird ein Zahnrad für ein Getriebe nach einem oder mehreren der voran diskutierten Ausführungsformen offenbart. Das Zahnrad ist dabei beispielsweise als Großrad ausgebildet. Insbesondere ist das Zahnrad im Sinne der vorliegenden Nomenklatur als zweites Zahnrad ausgebildet und steht mit dem ersten Zahnrad im Eingriff. Das Zahnrad weist weiterhin einen Zahnkranz, geeignet um mit dem Zahnkranz des ersten Zahnrad im Eingriff stehen zu können, einen mit dem Zahnkranz verbundenen Außenabschnitt mit einem Außenflansch, einen mit dem Außenabschnitt in einer Radialrichtung rotativ verbundenen Innenabschnitt, eine Verbindungseinrichtung ausgebildet zum Verbinden des Außenabschnitts mit dem Innenabschnitt, und isolierende Mittel auf, wobei diese Mittel derart zwischen Innenabschnitt und Außenabschnitt ausgebildet und angeordnet sind, sodass der Innenabschnitt und der Außenabschnitt voneinander elektrisch isoliert sind. Weiterhin ist explizit offenbart, dass die zuvor im Zusammenhang mit dem Getriebe beschriebenen Ausgestaltungdetails auch hinsichtlich des Zahnrads als offenbart gelten.

Ein solches Zahnrad ermöglicht erstmalig, eine elektrische Isolierung zwischen Welle-Zahnrad- und/oder Gehäuse darzustellen, wobei bestehende Getriebe mit einem solchen isolierenden Zahnrad auch nachgerüstet werden können.

In diesem Zusammenhang wird ein Verfahren zum Nachrüsten von Getrieben offenbart, aufweisend die Schritte: Entfernen eines vorhandenen Zahnrads eines Getriebes; Vorsehen von isolierenden Maßnahmen an Wellenlagern in einem Gehäuse des Getriebes, insbesondere werden vorhandene Wälz- oder Kugellager durch isolierende Wälz- oder Kugellager ersetzt oder es werden isolierende Lagerschalen entsprechend vorgesehen; Einbau eines Zahnrads gemäß einem der voran beschriebenen Ausführungsformen.

Gemäß einem weiteren Aspekt wird offenbart, eine Antriebsvorrichtung für ein Fahrzeug, insbesondere für ein Schienenfahrzeug vorzusehen, wobei die Antriebsvorrichtung mindestens ein Getriebe nach einem der vorangeschriebenen Ausführungsformen aufweist.

Weiterhin weist die Antriebsvorrichtung einen Antriebsmotor auf, der mit einer Antriebswelle (erste Welle) des Getriebes drehfest und nicht elektrisch isoliert verbunden ist. Die Antriebsvorrichtung ist ferner mit einer Abtriebswelle ausgestattet, die mittels des Getriebes rotativ - unter Übersetzung - mit der Antriebswelle verbunden ist.

Gemäß einer Ausführungsform ist die Antriebsvorrichtung integral ausgebildet, d. h. Halterung und teilweise sogar ein Gehäuse des Motors, Getriebe und die Lagerung der Abtriebswelle sind in einem gemeinsamen Bauteil angeordnet, wobei das gemeinsame Bauteil ein Kombinations-Gehäuse für Getriebe, Lager der Antriebswelle, und Abstützung des Motors sein kann.

Weiterhin wird ein Schienenfahrzeug mit einem Wagenkasten und einer Antriebsvorrichtung gemäß einem der voranstehenden Ausführungsbeispiele offenbart. Dabei kann die Antriebsvorrichtung zusammen mit dem Drehgestells ausgebildet sein.

Die vorstehend beschriebenen Ausführungsformen können beliebig, jedoch in sinnhafter Weise miteinander kombiniert werden, wobei beispielsweise auch das erste Zahnrad (Ritzel) mit einem Innenabschnitt und einem Außenabschnitt zweigeteilt ausgeführt sein kann.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen gleiche oder entsprechend ähnliche Teile.
Fig. 1 zeigt ein Schienenfahrzeug mit einer Antriebsvorrichtung,
Fig. 2 eine schematische Darstellung eines Getriebes der Antriebsvorrichtung des Schienenfahrzeugs gemäß Fig. 1,
Fig. 3 eine perspektivische Ansicht eines Zahnrads des Getriebes gemäß Fig. 2,
Fig. 4 einen Teilschnitt durch das Zahnrad gemäß Fig. 3,
Fig. 5 einen Detailschnitt einer Verbindungseinrichtung des Zahnrads gemäß Fig. 3 und Fig. 4, und
Fig. 6 eine axiale Sicht auf einen Flansch-Scheibenring des Zahnrads gemäß Fig. 3, Fig. 4 und Fig. 5.

### Ausführungsbeispiele

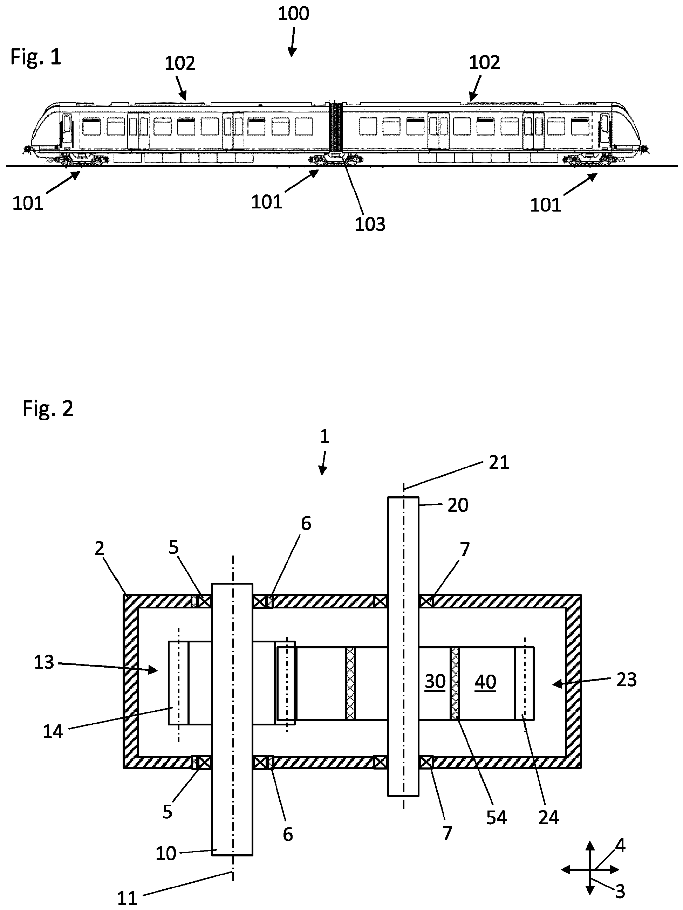

Zur Verdeutlichung des Gesamtverständnisses wird anhand Fig. 1 ein Schienenfahrzeug 100 gezeigt. Dieses Schienenfahrzeug 100 umfasst einen Wagenkasten 102 der mittels Drehgestellen 101 rollbar auf Schienen gelagert ist. Mindestens in dem mittleren Drehgestell 101 ist eine Antriebsvorrichtung 103 zum Antrieb des Schienenfahrzeugs 100 integral verbaut, sodass die Antriebsvorrichtung 103 gemeinsam mit dem Drehgestell 101 gegenüber dem Wagenkasten 102 schwenkbar vorgesehen ist.

Fig. 2 zeigt einen schematischen Ausschnitt durch ein Getriebe 1 der Antriebsvorrichtung 103. Die Darstellung beschränkt sich hierbei auf eine einzige Getriebestufe mit einem ersten Zahnrad 13, insbesondere ausgeführt als Ritzel, und mit einem zweiten Zahnrad 23, insbesondere ausgeführt als zweiteiliges Großrad. Das erste Zahnrad 13 ist drehfest mit einer ersten Welle 10, und das zweite Zahnrad 23 ist drehfest mit einer zweiten Welle 20 zum Übertragen von Umfangskräften verbunden.

Eine solche Welle-Nabel-Verbindung kann beispielsweise durch die folgenden Maßnahmen erreicht werden. Kraftschlüssige Verbindungen (Reibschluss): Die Kraftübertragung zwischen Welle und Nabe erfolgt durch Reibungswiderstand, der durch Presspassungen erfolgt, oder durch besondere Spannelemente wie zum Beispiel Klemmnaben oder Schrumpfscheiben, beide mit konischen Elementen. Formschlüssige Verbindungen, bei denen über eine bestimmte Formgebung, z. B. Keilwellenprofil, Polygonprofil, Zahnwellenprofil und Kerbverzahnung oder zusätzliche Mitnehmerelemente (Passfeder) die Kraftübertragung erreicht wird. Man unterscheidet hier auch zwischen mittelbarem und unmittelbarem Formschluss. Vorgespannte formschlüssige Verbindungen: Diese Kombination der beiden zuvor genannten Schlussarten entsteht u. a. beim Einsatz von Keilen. Stoffschlüssige Verbindungen, z. B. durch Kleben, Löten oder Schweißen.

Die erste Welle 10 ist mithilfe von Lagern 5 und Lagerisolierungen 6 elektrisch isoliert gegenüber einem Gehäuse 2 des Getriebes 1 drehbar gelagert und kann mit einer als motorisch und/oder generatorisch betreibbaren elektrischen Maschine drehfest verbunden werden. Denkbar ist auch, die erste Welle 10 integral mit einer Welle der elektrischen Maschine auszubilden.

Die isolierende Lagerung im Gehäuse 2 bewirkt, dass kein Stromfluss von der ersten Welle 10 in das Gehäuse 2 stattfinden kann, wodurch Laufflächen und weitere Komponenten der Lager 5 vor entsprechender Beschädigung oder Beeinträchtigung geschützt werden.

Ein erster Zahnkranz 14 des ersten Zahnrads 13 (Ritzel) ist mit selbigem drehfest verbunden - beispielsweise mittels einer Schrumpfverbindung - und steht mit einem zweiten Zahnkranz 24 des zweiten Zahnrads 20 (Großrad) im Eingriff. Dadurch steht der zweite Zahnkranz 24 mit dem ersten Zahnkranz 14 in elektrischer Verbindung. Folglich könnte ein Stromfluss von einer elektrischen Maschine über die erste Welle 10 und über das erste Zahnrad 13 bis in den zweiten Zahnkranz 24 stattfinden.

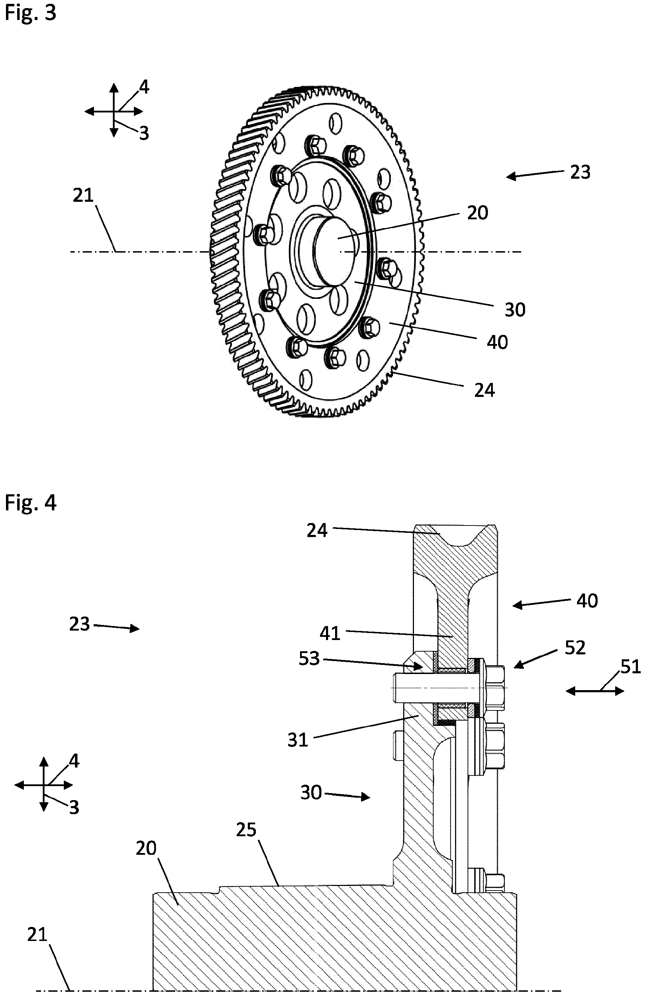

Um einen solchen Stromfluss zu verhindern, ist - wie gezeigt in Fig. 3, 4 und 5 - das zweite Zahnrad 23 mit einem Innenabschnitt 30 und einem Außenabschnitt 40 zweigeteilt ausgebildet, wobei isolierende Mittel 54 wirksam zwischen dem Innenabschnitt 30 und dem Außenabschnitt 40 vorgesehen sind. Der Außenabschnitt 40 ist dabei drehfest oder einstückig mit dem zweiten Zahnkranz 24 verbunden. Weiterhin ist eine Verbindungseinrichtung 50 zwischen Innenabschnitt 30 und Außenabschnitt 40 vorgesehen, um eine mindestens drehfeste Verbindung zwischen von Innenabschnitt 30 und Außenabschnitt 40 zu erzielen. Insbesondere ist die Verbindungseinrichtung 50 so gestaltet, dass Innenabschnitt 30 und Außenabschnitt 40 zueinander (bezüglich aller Freiheitsgrade) vollständig festgelegt sind. Der Innenabschnitt 30 kann mindestens drehfest oder einstückig mit der zweiten Welle 20 ausgebildet sein.

Durch die zuvor beschriebene Konzeption wird erstmalig erreicht, dass eine mit einer elektrischen Maschine verbundene Getriebestufe des Getriebes 2 bezüglich der weiteren Bestandteile des Getriebes 2 oder weiterer Getriebestufen und Zahnräder vollständig galvanisch separiert und elektrisch getrennt ausgebildet ist.

Auch ist denkbar, das erste Zahnrad (Ritzel) analog zur Konstruktion des zweiten Zahnrads 24 zweiteilig auszubilden.

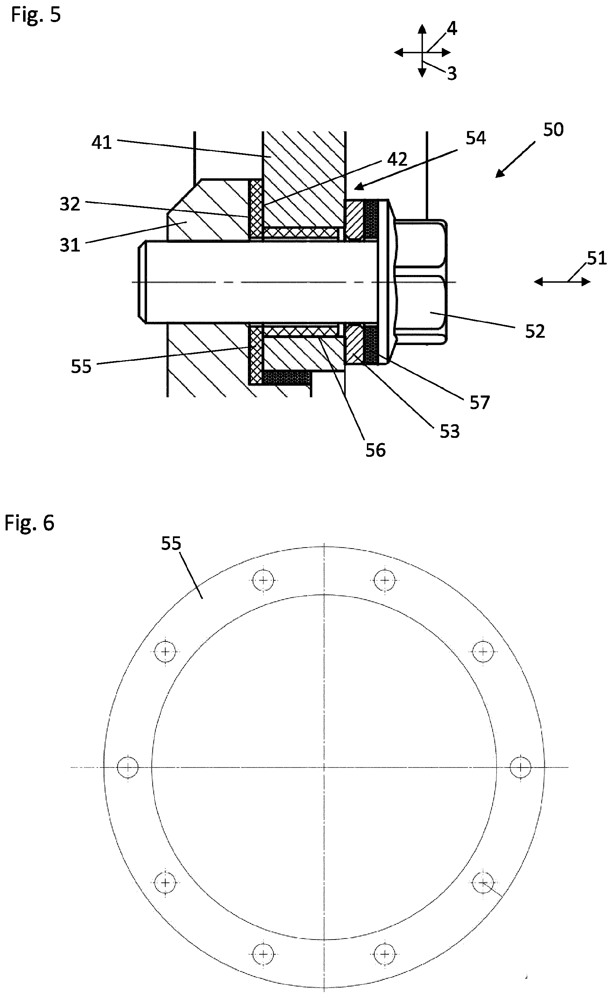

Mithilfe der Fig. 4 und Fig. 5 wird der detaillierte Aufbau des zweiten Zahnrads 30 detailliert erläutert, wobei der Innenabschnitt 30 des zweiten Zahnrads 20 in Teilen einstückig mit der zweiten Welle 20 ausgebildet ist. Der Innenabschnitt 30 ist in einem in Radialrichtung 3 des zweiten Zahnrads 20 äußeren Bereich zumindest abschnittsweise als Innenflansch 31 mit einer in Radialrichtung 3 verlaufenden Innenflanschfläche 32 ausgebildet. Vorzugsweise ist die Innenflanschfläche 32 senkrecht zu einer Axialrichtung 4 des zweiten Zahnrads 23 ausgerichtet und verläuft scheibenförmig um einen gesamten Umfang des Innenabschnitts 30.

Analog zum Innenflansch 30 weist der Außenabschnitt 40 einen in Radialrichtung 3 innenliegenden Außenflansch 41 mit einer Außenflanschfläche 42 auf. Die Außenflanschfläche 42 ist dabei senkrecht zur Axialrichtung 4 ausgerichtet und verläuft scheibenförmig um einen Innenumfang des Außenabschnitt 40.

Der Außenabschnitt 40 und der Außenflansch 41 und der Innenabschnitt 30 und der Innenabschnitt 31 sind dabei derart gestaltet und aufeinander abgestimmt, sodass die Innenflanschfläche 32 mit der Außenflanschfläche 42 korrespondiert und diese zueinander zugewandt ausgerichtet werden können.

Um den Innenabschnitt 30 und den Außenabschnitt 40 miteinander verbinden zu können ist die Verbindungseinrichtung 50 mit einem Verbindungsmittel 52 ausgebildet. Dieses ist vorzugsweise als Schraube ausgebildet, die gemäß dem vorliegen Ausführungsbeispiel eine Bohrung des Außenflansch 41 durchragt und in ein Gewinde des Innenflansch 31 eingeschraubt ist. Auf diese Weise kann eine in Axialrichtung 3 wirkenden Normalkraft zum Erzeugen eines in Umfangsrichtung wirkenden Reibschluss' zwischen der Innenflanschfläche 32 und der Außenflanschfläche 42 bereitgestellt werden.

Zur galvanischen Trennung von Innenabschnitt 31 und Außenabschnitt 41 sind die isolierenden Mittel 54 an allen relevanten dazwischenliegenden Kontaktflächen vorgesehen. Einerseits weisen die isolierenden Mittel 54 einen isolierenden Flansch-Scheibenring 55, mindestens eine Isolierhülse 56 und ein Axial-Isolierelement 57 auf. Der Flansch-Scheibenring 55 dient zur galvanischen Trennung der Innenflanschfläche 32 von der Außenflanschfläche 42 und ist vorzugsweise als scheibenförmiger Ring um den gesamten Umfang der Innenflanschfläche 32 ausgebildet (Fig. 6).

Der Flansch-Scheibenring 55 weist einen Werkstoff derart auf und ist derart gestaltet, dass der Flansch-Scheibenring 55 für den Reibschluss notwendige Flächenpressungen erträgt und gleichzeitig dazu dienliche Haft- und Reibungskoeffizienten aufweist. Insbesondere sind die Werkstoffe und/oder Oberflächen von Flansch-Scheibenring 55 und Innenflansch 31/Außenflansch 32 derart ausgewählt, sodass das entsprechende tribologische System einen Reibwert von mindestens µ=0,2, vorzugsweise mindestens µ=0,3, bevorzugt mindestens µ=0,4 aufweist.

Um eine galvanische Trennung von Verbindungsmittel 52 und einer Innenwandung der Bohrung in dem Außenflansch 41 zu erzielen, umfasst die Isolierhülse 56 im Wesentlichen den gesamten Umfang der Bohrung und erstreckt sich in Axialrichtung 51 des Verbindungsmittels 52 oder der Bohrung im Wesentlichen über die gesamte Tiefe der Bohrung.

Eine isolierende Anordnung von einem Kopf des Verbindungsmittels 52 und einer damit korrespondierenden Auflagefläche des Außenflansches 41 wird durch das Axial-Isolierelement 57 - vorzugsweise ausgebildet als isolierende Unterlegscheibe - erreicht.

Im vorliegenden Ausführungsbeispiel ist weiterhin ein Sicherungselement 53 - vorzugsweise ausgebildet als Unterlegscheibe - vorgesehen, um Flächenpressungen in einem zulässigen Bereich zu halten.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen, beispielsweise kann die Verbindungseinrichtung 50 zwischen Innenabschnitt 30 und Außenabschnitt 40 umgekehrt zur beschriebenen Anordnung ausgebildet sein, sodass sich ein Gewinde für das Verbindungsmittel 52 in dem Außenflansch 41 und eine entsprechende Bohrung im Innenflansch 31 befindet.

Auch ist es denkbar, dass Getriebe 1 mehr als einstufig auszubilden. Diesbezüglich wird in Fig. 4 dargestellt, dass die zweite Welle 20 des zweiten Zahnrads 23 eine weitere Sitzfläche 25 für ein weiteres nicht dargestelltes Zahnrad (weiteres Ritzel) aufweist.

### Bezugszeichenliste

- 1: Getriebe
- 2: Gehäuse
- 3: Axialrichtung
- 4: Radialrichtung
- 5: Lager
- 6: Lagerisolierung
- 7: Lager
- 10: erste Welle
- 11: erste Rotationsachse
- 12: erstes Lager
- 13: erstes Zahnrad
- 14: erster Zahnkranz
- 20: Zweite Welle
- 21: zweite Rotationsachse
- 22: zweites Lager
- 23: zweites Zahnrad
- 24: zweiter Zahnkranz
- 25: Sitzfläche
- 30: Innenabschnitt
- 31: Innenflansch
- 32: Innenflanschfläche
- 33: Innenbohrung
- 40: Außenabschnitt
- 41: Außenflansch
- 42: Außenflanschfläche
- 43: Außenbohrung
- 50: Verbindungseinrichtung
- 51: Axialrichtung
- 52: Verbindungsmittel/Schraube
- 53: Sicherungselement
- 54: isolierende Mittel
- 55: Flansch-Scheibenring
- 56: Isolierhülse
- 57: Axial-Isolierelement
- 100: Fahrzeug
- 101: Drehgestell
- 102: Wagenkasten
- 103: Antriebsvorrichtung

## Patentansprüche

1. Getriebe (1) für eine Antriebsvorrichtung (103) für ein Fahrzeug, insbesondere für ein Schienenfahrzeug (100), aufweisend
- ein Gehäuse (2),
- ein auf einer ersten Welle (10) drehfest befestigtes erstes Zahnrad (13) mit einem ersten Zahnkranz (14),
- ein auf einer zweiten Welle (20) drehfest befestigtes, und
- ein mit dem ersten Zahnrad (13) im Eingriff stehendes zweites Zahnrad (23) mit einem zweiten Zahnkranz (24),
- wobei die erste Welle (10) und/oder die zweite Welle (20) in dem Gehäuse (2) drehbar und/oder demgegenüber elektrisch isoliert gelagert ist/sind,
- wobei das erste Zahnrad und/oder das zweite Zahnrad (24) mindestens zweigeteilt ausgebildet ist/sind und einen radial innenliegenden Innenabschnitt (30) und einen dazu radial außenliegenden Außenabschnitt (40) aufweist/en,
**dadurch gekennzeichnet, dass** isolierende Mittel (54) isolierend zwischen dem Innenabschnitt (30) und dem Außenabschnitt (40) vorgesehen sind, und
- der erste Zahnkranz (14) gegenüber der ersten Welle (10) und/oder der zweite Zahnkranz (24) gegenüber der zweiten Welle (20) elektrisch isoliert ist/sind.

2. Getriebe (1) nach Anspruch 1, wobei zwischen der ersten Welle (10) und dem ersten Zahnkranz (14) und/oder zwischen der zweiten Welle (20) und dem zweiten Zahnkranz (24) isolierende Mittel (54) zum Bereitstellen einer elektrischen Isolierung vorgesehen sind.

3. Getriebe (1) nach Anspruch 2, wobei die isolierenden Mittel im Bereich einer Welle-Nabel-Verbindung vorgesehen sind, und als isolierende Beschichtung und/oder als isolierende Buchse ausgebildet sind.

4. Getriebe (1) nach einem der voranstehenden Ansprüche, wobei die erste Welle (10) als Antriebswelle derart ausgebildet ist, sodass diese mit einem rotativen Element zur rotativen Leistungsaufnahme verbunden werden kann.

5. Getriebe (1) nach einem der voranstehenden Ansprüche, wobei die erste Welle (10) mittels einer Lagerisolierung (6) gegenüber dem Gehäuse (2) elektrisch isoliert ist.

6. Getriebe (1) nach einem der Ansprüche 1 bis 5, wobei das erste Zahnrad und/oder das zweite Zahnrad (23) eine Verbindungseinrichtung (50) mit Verbindungsmitteln (52), insbesondere ausgebildet als Schraube, zum mindestens drehfesten Verbinden von Innenabschnitt (30) und Außenabschnitt (40) aufweist/en.

7. Getriebe (1) nach einem der Ansprüche 1 bis 6, wobei der Innenabschnitt (30) integral, insbesondere einstückig, mit der jeweiligen Welle (20) ausgebildet ist.

8. Getriebe (1) nach einem der voranstehenden Ansprüche, wobei der zweite Zahnkranz (24) eine größere Anzahl an Zähnen als der erste Zahnkranz (14) aufweist, insbesondere wobei das zweite Zahnrad (23) als Großrad ausgebildet ist.

9. Getriebe (1) nach einem der Ansprüche 1 bis 8, wobei der Innenabschnitt (30) einen Innenflansch (31) mit einer Innenflanschfläche (32) und der Außenabschnitt (40) einen damit verbundenen Außenflansch (41) mit einer Außenflanschfläche (42) aufweist, und wobei die isolierenden Mittel (54) mindestens einen isolierenden Flansch-Scheibenring (55) aufweisen, der zwischen der Innenflanschfläche (32) und der Außenflanschfläche (42) angeordnet ist.

10. Getriebe (1) nach einem der Ansprüche 1 bis 9, wobei die isolierenden Mittel (54) mindestens eine Isolierhülse (56) und/oder einen Axial-Isolierelement (57) zum Isolieren eines Verbindungsmittels (52) gegenüber dem Innenabschnitt oder gegenüber dem Außenabschnitt (40) aufweisen.

11. Getriebe (1) nach einem der voranstehenden Ansprüche, wobei die isolierenden Mittel (54) zumindest teilweise aus Kunststoff, insbesondere aus Poly-Ether-Ether-Keton (PEEK), Vetronit, Aluminiumoxid (Al₂O₃), und/oder oxidfaserverstärkter Oxidkeramik hergestellt ist/sind.

12. Zahnrad (23) für ein Getriebe (1) nach einem der voranstehenden Ansprüche 1 bis 11, insbesondere ausgebildet als zweites Zahnrad (23), aufweisend einen Zahnkranz (24) geeignet um mit dem Zahnkranz (14) des ersten Zahnrad (13) im Eingriff stehen zu können, einen mit dem Zahnkranz (24) verbundenen Außenabschnitt (40) mit einem Außenflansch (41), einen mit dem Außenabschnitt (40) in einer Radialrichtung (4) rotativ verbundenen Innenabschnitt (30), eine Verbindungseinrichtung (50) ausgebildet zum Verbinden des Außenabschnitt (40) mit dem Innenabschnitt (30), und isolierende Mittel (54) derart zwischen Innenabschnitt (30) und Außenabschnitt (40) ausgebildet und angeordnet, sodass der Innenabschnitt (30) und der Außenabschnitt (40) voneinander elektrisch isoliert sind.

13. Antriebsvorrichtung für ein Fahrzeug, insbesondere für ein Schienenfahrzeug (100), aufweisend
- einen Antriebsmotor, ein Getriebe (1) nach einem der Ansprüche 1 bis 11, und eine mit Antriebsrädern des Schienenfahrzeugs (100) verbindbare Abtriebsachse,
- wobei die erste Welle (10) des Getriebes (1) rotativ mit einer Abtriebswelle des Antriebsmotor und/oder einer damit verbundenen Kupplung verbunden ist, und
- wobei eine mit der ersten Welle (10) rotativ verbundene Abtriebswelle des Getriebes (1) rotativ mit der Antriebsachse verbunden ist.

14. Fahrzeug mit einem Wagenkasten (102) und einer Antriebsvorrichtung nach Anspruch 13, insbesondere wobei das Fahrzeug als Schienenfahrzeug (100) ausgebildet ist, wobei der Wagenkasten (102) des Schienenfahrzeugs (100) mithilfe eines Drehgestells (101) auf Schienen rollbar gelagert werden kann, und wobei das Drehgestell (101) die Antriebsvorrichtung aufweist.

## Claims

1. Gearing (1) for a drive device (103) for a vehicle, in particular for a rail vehicle (100), comprising:
- a housing (2),
- a first gear wheel (13) fixed in a rotationally fixed manner on a first shaft (10) with a first gear rim (14),
- a second gear wheel (23) fixed in a rotationally fixed manner on a second shaft (20), and
- engaging with the first gear wheel (13), with a second gear rim (24),
- wherein the first shaft (10) and/or the second shaft (20) are mounted in the housing (2) rotatable and/or electrically insulated from it,
- wherein the first gear wheel and/or the second gear wheel (24) is/are formed in at least two parts and comprise a radially inner internal section (30) and, located radially outside thereof, an outer section (40),
**characterised in that**
- insulation means (54) are provided for insulating between the internal section (30) and the outer section (40), and
- the first gear rim (14) is electrically insulated from the first shaft (10) and/or the second gear rim (24) is electrically insulated from the second shaft (20).

2. Gearing (1) of claim 1, wherein between the first shaft (10) and the first gear rim (14) and/or between the second shaft (20) and the second gear rim (24) insulating means (54) are provided for providing an electrical insulation.

3. Gearing (1) of claim 2, wherein the insulating means are provided in the region of a shaft-hub connection and are carried out as an insulating coating and/or as an insulating bushing.

4. Gearing (1) of one of the preceding claims, wherein the first shaft (10) is carried out as a driving shaft in such a way that it can be connected to a rotative element for rotational power consumption.

5. Gearing (1) of one of the preceding claims, wherein the first shaft (10) is electrically insulated from the housing (2) by means of a bearing insulation (6).

6. Gearing (1) of one of claims 1 to 5, wherein the first gear wheel and/or the second gear wheel (23) comprise(s) a connecting device (50) with connecting means (52), in particular carried out as screw, for connecting the internal section (30) and the outer section (40) at least in a rotationally fixed manner.

7. Gearing (1) of one of claims 1 to 6, wherein the internal section (30) is formed integrally, in particular in one piece, with the respective shaft (20).

8. Gearing (1) of one of the preceding claims, wherein the second gear rim (24) has a greater number of teeth than the first gear rim (14), in particular wherein the second gear wheel (23) is carried out as a large gear wheel.

9. Gearing (1) of one of claims 1 to 8, wherein the internal section (30) comprises an internal flange (31) with an internal flange surface (32) and the outer section (40) comprises an outer flange (41) connected thereto with an outer flange surface (42), and wherein the insulating means (54) comprise at least one insulating flange disc ring (55) which is arranged between the internal flange surface (32) and the outer flange surface (42).

10. Gearing (1) of one of claims 1 to 9, wherein the insulating means (54) comprise at least one insulating sleeve (56) and/or an axial insulating element (57) for insulating a connecting means (52) from the internal section or from the outer section (40).

11. Gearing (1) of one of the preceding claims, wherein the insulating means (54) are manufactured at least partially of plastic, in particular of polyether ether ketone (PEEK), of Vetronite, of aluminium oxide (Al₂O₃) and/or of oxide fibre-reinforced oxide ceramics.

12. Gear wheel (23) for a gearing (1) according to one of the preceding claims 1 to 11, in particular carried out as a second gear wheel (23), comprising a gear rim (24) configured for engaging with the gear rim (14) of the first gear wheel (13), an outer section (40) connected with the gear rim (24) with an outer flange (41), an internal section (30) connected in a rotatable manner with the outer section (40) in a radial direction (4), a connecting device (50) carried out for connecting the outer section (40) with the internal section (30), and insulating means (54) carried out and arranged such between the internal section (30) and the outer section (40) that the internal section (30) and the outer section (40) are electrically insulated from each other.

13. Drive device for a vehicle, in particular for a rail vehicle (100), comprising
- a drive motor, a gearing (1) of one of claims 1 to 11, and an output axle connectable to drive wheels of the rail vehicle (100),
- wherein the first shaft (10) of the gearing (1) is rotatably connected to an output shaft of the drive motor and/or a coupling connected thereto, and
- wherein an output shaft of the gearing (1) rotatably connected to the first shaft (10) is rotatably connected to the drive axle.

14. Vehicle with a car body (102) and a drive device of claim 13, in particular wherein the vehicle is carried out as a rail vehicle (100), wherein the car body (102) of the rail vehicle (100) can be mounted rollable on rails by means of a bogie (101), and wherein the bogie (101) comprises the drive device.

## Revendications

1. Transmission (1) pour un dispositif d'entraînement (103) pour un véhicule, en particulier pour un véhicule ferroviaire (100), présentant
- un carter (2),
- une première roue dentée (13) fixée de manière solidaire en rotation sur un premier arbre (10) et comportant une première couronne dentée (14),
- une deuxième roue dentée (23) fixée de manière solidaire en rotation sur un deuxième arbre (20) et
- en prise avec la première roue dentée (13) et comportant une deuxième couronne dentée (24),
- dans laquelle le premier arbre (10) et/ou le deuxième arbre (20) sont montés dans le carter (2) de manière à pouvoir tourner et/ou de manière à être isolés électriquement par rapport à celui-ci,
- dans laquelle la première roue dentée et/ou la deuxième roue dentée (24) sont réalisées au moins en deux parties et présentent une section intérieure (30) située radialement à l'intérieur et, située radialement à l'extérieur par rapport à celle-ci, une section extérieure (40),
**caractérisée en ce que**
des moyens d'isolation (54) sont prévus de manière à isoler entre la section intérieure (30) et la section extérieure (40), et
- la première couronne dentée (14) est isolée électriquement par rapport au premier arbre (10) et/ou la deuxième couronne dentée (24) est isolée électriquement par rapport au deuxième arbre (20).

2. Transmission (1) selon la revendication 1, dans laquelle des moyens d'isolation (54) sont prévus entre le premier arbre (10) et la première couronne dentée (14) et/ou entre le deuxième arbre (20) et la deuxième couronne dentée (24) pour la fourniture d'une isolation électrique.

3. Transmission (1) selon la revendication 2, dans laquelle les moyens d'isolation sont prévus dans la zone d'une liaison arbre-moyeu, et sont réalisés sous la forme d'un revêtement isolant et/ou d'un manchon isolant.

4. Transmission (1) selon l'une des revendications précédentes, dans laquelle le premier arbre (10) est réalisé en tant qu'arbre d'entraînement de telle sorte qu'il peut être relié à un élément rotatif pour l'absorption de puissance en rotation.

5. Transmission (1) selon l'une des revendications précédentes, dans laquelle le premier arbre (10) est isolé électriquement par rapport au carter (2) au moyen d'une isolation de palier (6).

6. Transmission (1) selon l'une des revendications 1 à 5, dans laquelle la première roue dentée et/ou la deuxième roue dentée (23) présentent un dispositif de liaison (50) comportant des moyens de liaison (52), en particulier réalisés en tant que vis, pour la liaison au moins de manière solidaire en rotation de la section intérieure (30) et de la section extérieure (40).

7. Transmission (1) selon l'une des revendications 1 à 6, dans laquelle la section intérieure (30) est réalisée d'un seul tenant, en particulier en une seule pièce, avec l'arbre (20) respectif.

8. Transmission (1) selon l'une des revendications précédentes, dans laquelle la deuxième couronne dentée (24) présente un plus grand nombre de dents que la première couronne dentée (14), en particulier dans laquelle la deuxième roue dentée (23) est réalisée en tant que grande roue.

9. Transmission (1) selon l'une des revendications 1 à 8, dans laquelle la section intérieure (30) présente une bride intérieure (31) avec une surface de bride intérieure (32) et, reliée à celle-ci, la section extérieure (40) présente une bride extérieure (41) avec une surface de bride extérieure (42), et dans laquelle les moyens d'isolation (54) présentent au moins un disque annulaire de bride isolant (55) disposé entre la surface de bride intérieure (32) et la surface de bride extérieure (42).

10. Transmission (1) selon l'une des revendications 1 à 9, dans laquelle les moyens d'isolation (54) présentent au moins un manchon isolant (56) et/ou un élément isolant axial (57) pour l'isolation d'un moyen de liaison (52) par rapport à la section intérieure ou par rapport à la section extérieure (40).

11. Transmission (1) selon l'une des revendications précédentes, dans laquelle les moyens d'isolation (54) sont fabriqués au moins en partie en matière plastique, en particulier en polyétheréthercétone (PEEK), en vétronite, en oxyde d'aluminium (Al₂O₃), et/ou en céramique d'oxyde renforcée de fibres d'oxyde.

12. Roue dentée (23) pour une transmission (1) selon l'une des revendications 1 à 11 précédentes, réalisée en particulier en tant que deuxième roue dentée (23), présentant une couronne dentée (24) adaptée pour pouvoir être en prise avec la couronne dentée (14) de la première roue dentée (13), une section extérieure (40) reliée à la couronne dentée (24) et comportant une bride extérieure (41), une section intérieure (30) reliée de manière à tourner à la section extérieure (40) dans une direction radiale (4), un dispositif de liaison (50) réalisé pour la liaison de la section extérieure (40) à la section intérieure (30), et des moyens d'isolation (54) réalisés et disposés entre la section intérieure (30) et la section extérieure (40) de telle sorte que la section intérieure (30) et la section extérieure (40) sont isolées électriquement l'une de l'autre.

13. Dispositif d'entraînement pour un véhicule, en particulier pour un véhicule ferroviaire (100), présentant
- un moteur d'entraînement, une transmission (1) selon l'une des revendications 1 à 11, et un axe de sortie apte à être relié à des roues d'entraînement du véhicule ferroviaire (100),
- dans lequel le premier arbre (10) de la transmission (1) est relié de manière à tourner à un arbre de sortie du moteur d'entraînement et/ou à un accouplement relié à celui-ci, et
- dans lequel un arbre de sortie de la transmission (1), relié au premier arbre (10) de manière à tourner, est relié de manière à tourner à l'axe d'entrée.

14. Véhicule comportant une caisse de voiture (102) et un dispositif d'entraînement selon la revendication 13, en particulier dans lequel le véhicule est réalisé en tant que véhicule ferroviaire (100), dans lequel la caisse de voiture (102) du véhicule ferroviaire (100) peut être montée de manière à pouvoir rouler sur des rails à l'aide d'un bogie (101), et dans lequel le bogie (101) présente le dispositif d'entraînement.
